# EUROPEAN PATENT APPLICATION

(11) **EP 2 078 704 A1**
(43) Date of publication of application: **15.07.2009**
(21) Application number: 08000595.2
(22) Date of filing: 14.01.2008
(51) Int. Cl.: C03B 5/12, C03B 5/235, F23C 3/00

(54) **Process and device for making mineral fibres**

(71) Applicant: Rockwool International A/S, 2460 Hedehusene (DK)
(72) Inventor: The designation of the inventor has not yet been filed
(74) Representative: Samuels, Lucy Alice

(57) **Abstract**

The present invention relates to a process for making a mineral melt comprising
providing a circulating combustion chamber (25)
transporting solid particulate fuel along a fuel conduit (1) and injecting the solid particulate fuel into the combustion chamber through a fuel inlet,
injecting particulate mineral material into the combustion chamber through a mineral material inlet (7),
injecting combustion gas into the combustion chamber through a first gas inlet (3),
mixing the fuel with the combustion gas and combusting the fuel to form a flame,
thereby melting the mineral material to form a mineral melt and hot exhaust gases,
separating the hot exhaust gases from the melt and collecting the melt,
and wherein the solid particulate fuel is not entrained in gas as it is injected through the fuel inlet and wherein the fuel and combustion gas are mixed by the provision of a stream of secondary gas through a second gas inlet (8) which is adjacent the fuel inlet, wherein the secondary gas comprises at least 25% oxygen O₂ and not more than 75% nitrogen N₂,
and wherein the process includes substantially preventing gas entering the fuel conduit (1). The invention further relates to an apparatus.

## Description

This invention relates to the production of a mineral melt by burning combustible material in the presence of inorganic particulate material and thereby forming a melt. The melt can then be fiberised to form mineral fibres.

When the fibres are glass fibres, the melt is typically formed by adding inorganic particulate material to a preformed pool of melt in an electric or other tank furnace. This is appropriate having regard to the chemistry, physical properties and economics of the manufacture of glass fibres, typically having a chemical analysis, by weight of oxides, of above 10% Na₂O + K₂O, below 3% iron as FeO, below 20% CaO + MgO, above 50% SiO₂ and below 5% Al₂O₃, and often also some boron. However this system is not practical nor economic, having regard to the melt temperature, other physical properties and economics, for the manufacture of rock, stone or slag fibres, typically having an analysis, by weight of oxides, of below 10% Na₂O + K₂O, above 20% CaO + MgO above 3% iron as FeO, and below 50% SiO₂ and, often, above 10% Al₂O₃, and usually boron in, at most, trivially small amounts.

The normal way of producing the melt for slag, stone or rock fibres is by means of a shaft furnace in which a self-supporting stack of inorganic particulate material is heated by combustion of combustible material in the furnace. The stack gradually melts and is replenished from the top, with melt draining down the stack and out from the bottom of the furnace. The normal furnace for this purpose is a cupola furnace.

It is necessary for the stack to be self-supporting and permeable to the combustion gases, which are generally generated by combustion of carbonaceous material in the stack. It is therefore necessary that everything in the stack is relatively coarse (in order that the stack is permeable) and has high physical strength and does not collapse until combustion or melting is well advanced. In practice this means that the carbonaceous material is coke and the particulate material is either coarsely crushed rock, stone or slag or is in the form of briquettes formed from fine particulate material.

Accordingly, if the material which is available is only available in finely divided form, it is necessary to incur the expense and inconvenience of forming it into briquettes. Briquetting usually uses sulphur-containing materials as binder, such as Portland cement with gypsum, and this means that the effluent is liable to have a high sulphur content, which has to be treated. The gas would typically contain H₂S and CO if it is not subjected to after-burning.

For this, and other reasons, it is generally necessary to subject the effluent gases from the cupola furnace to an after-burning stage, in order that the gases which are discharged into the atmosphere are environmentally satisfactory, and it would be desirable to be able to avoid the need for using an after-burner.

The cupola or other stack furnace system also has the disadvantage that conditions in the furnace always tend to be sufficiently reducing that some of the iron is reduced to metallic iron. This necessitates separating metallic iron from the melt, reduces wool production, leads to the provision of iron waste and also tends to incur the risk of corrosion in the zone containing iron and slag.

Another disadvantage is that the process does not have high thermal efficiency.

Despite these disadvantages, the process using a cupola or other stack furnace has been widely adopted throughout the world for the manufacture of rock, stone or slag fibres, e.g., having the analysis given above.

An alternative and entirely different system for the production of a mineral melt that avoids or reduces the disadvantages of the cupola system is disclosed in our earlier publication WO 03/002469. This system involves suspending powdered coal, or other fuel, in preheated combustion air and combusting the suspended fuel in the presence of suspended particulate mineral material in a circulating combustion chamber, i.e., a combustion chamber in which the suspended particulate materials and air circulate in a system which is or approaches a cyclone circulation system. This is commonly referred to as a cyclone furnace.

This process results in the formation of a mineral melt and hot exhaust gases. The suspended fuel is introduced into the pre-heated combustion air via an injection pipe to which the particulate material is added. To ensure that environmental effluent problems are minimised, particularly those associated with nitrogen oxides, hereinafter referred to as NOx, in the exhaust gases, these gases can be contacted under NOx reducing conditions with the particulate material which is to be pre-heated.

The cyclone furnace has significant advantages compared to cupola or other stack furnaces. With respect to fuel, it avoids the need for briquetting fine particles and a wide range of fuels can be used including, for example, plastic. Using a melting cyclone furnace eliminates the risk of reduction of the ores to iron and releases exhaust gases which are environmentally acceptable. The flexibility in melt capacity is much better than with a cupola furnace meaning that production can easily be switched, from, for example, 40% to 100% of total capacity. Furthermore, melting in a cyclone furnace is much quicker than is the case for a cupola furnace and is in the order of minutes, rather than in the order of hours.

Hence, using a melting cyclone furnace system is economically and environmentally desirable and the system disclosed in WO 03/002469 works well. There is, however, room for improvement in the process.

US 4,365,984 is also concerned with producing mineral wool using a melting cyclone furnace and involves feeding a single stream of particulate waste material containing inorganic non-combustible and organic combustible components into combustion air. The velocity of this particle stream is said to be in the region of 30 to 60 m/s. Combustion takes place once the particle stream enters the combustion zone.

It has been discovered that in prior art systems for producing a mineral melt in a circulating combustion chamber, sub-optimal efficiency was achieved due to slow and incomplete mixing between the fuel, combustion gases and hot circulating gases in the combustion chamber. This is believed to be due to the fact that when a stream of fuel particles enters the combustion chamber, rather than dispersing, the stream remains at least partially intact thereby resembling a "rod" of fuel particles in the chamber. This means that the fuel particles do not combust immediately as they are not mixed thoroughly with the combustion air and the hot gases in the chamber.

Additionally, the fuel particles in different regions of the "rod" enter different regions of the circulation stream within the combustion chamber and consequently have very different residence times within the chamber. This leads to a substantial proportion of the fuel particles having a residence time within the combustion chamber which is too short to permit complete combustion. These particles are lost from the system completely in the exhaust gases or may combust in the exhaust outlet. This is inefficient and undesirable.

A major concern in this field is longevity of the cyclone furnace apparatus as the conditions are very stressful, particularly for parts of the apparatus through which particulate materials pass at speed. These parts are especially prone to wearing. Therefore, although simply increasing the speed at which suspended fuel particles enter the combustion chamber could result in more homogeneous mixing, it would also increase the wear of the apparatus to an unacceptable level.

The present inventors have previously addressed the problem of low fuel efficiency without compromising the longevity of the apparatus by providing secondary air which is injected into the combustion chamber adjacent to the stream of particulate fuel. It is preferred that the secondary gas is travelling faster, preferably at least 100m/s faster, than the combustion gas. The secondary gas causes localised turbulence which results in mixing of the particulate fuel with the combustion gas and with the circulating chamber gases. Hence, the fuel particles are dispersed within the chamber and combust more quickly due to immediate mixing with both the hot circulating chamber gases and with the combustion gas. As the fuel particles are better dispersed within the circulating combustion air, their residence time within the chamber is more uniform, which means that a high proportion of the fuel particles undergo full combustion within the chamber and contribute to producing the mineral melt. This reduces the amount of carbon monoxide formed, by enhancing complete combustion of the fuel.

A further advantage of this is that the secondary air, which has a high velocity, of which a large component is directed into the body of the chamber, helps to support the circulation currents in the chamber and boosts the momentum of the circulating gases to maintain the cyclone effect.

In our earlier application EP 06254268.3 we describe a specific process for making a mineral melt which addresses these problems. This process comprises
providing a circulating combustion chamber which contains circulating chamber gases,
injecting a stream of particulate fuel into the combustion chamber through a fuel feed pipe,
injected preheated combustion air into the combustion chamber;
mixing the stream of particulate fuel with the preheated combustion air and with the circulating chamber gases by injecting into the combustion chamber secondary air, through a secondary air inlet, wherein the secondary air is injected adjacent to the stream of particulate fuel and the injection speed of the secondary air is at least 100 m/s greater than the injection speed of the particulate fuel and combustion air;
suspending particulate mineral material in the circulating chamber gases and combusting the fuel, thereby melting the particulate mineral material and forming a mineral melt and hot exhaust gases; and
separating the hot exhaust gases from the melt and collecting the melt.

The application also discloses an apparatus which addresses these problems which comprises
a circulating combustion chamber,
a fuel feedpipe which opens into the combustion chamber, a secondary air inlet which concentrically surrounds the fuel feedpipe and has a converging nozzle at its opening;
means for injecting combustion air into the chamber;
means for injecting particulate mineral material into the chamber;
means for separating hot exhaust gases from molten mineral material, and
means for collecting the melt.

There are also various other disclosures of the use of a cyclone furnace, usually in applications other than for production of mineral wool. It is usual in these to transport the fuel as particulate fuel (most commonly solid particulate fuel) in a stream of gas which is generally combustion air.

An example of this is US 4,566,903 which describes the pyrometallurgical treatment of fine grained solids. The fuel injected into streams of particulate fuel are introduced into the cyclone furnace as a stream of particles entrained in combustion air. This combustion air is described as primary air. Secondary air is introduced from a conduit which is concentric with the conduit for the primary air and for the fuel/mineral material blend. The possibility of flashback, namely ignition of the fuel before it enters the cyclone furnace, is mentioned and is avoided by having a high mass flow velocity, i.e., linear speed, of the stream of fuel particles in combustion gas. It is stated that both the primary and secondary air can be enriched with up to 40% oxygen.

There are various other disclosures such as US 3,759,501, US 2005/0039654 and DE 19500962, which disclose transportation of particulate fuel into the cyclone furnace as a stream entrained in a carrier gas which is usually the combustion air.

We find that it is desirable in processes of producing a mineral melt using a cyclone furnace that the combustion gas is enriched with oxygen and indeed it can be advantageous to use combustion gas which is substantially pure oxygen.

This has the advantage that the apparatus as a whole can be more compact and energy efficient. It is also a good way to avoid the problem of generation of NOx in the exhaust gases, discussed above.

In this case, any secondary gas which is supplied to aid in distributing the solid particulate fuel as it enters the combustion chamber should also be enriched with oxygen to at least the same degree so as to avoid introducing undesirably large amounts of other gas (especially nitrogen) into the combustion chamber.

This also means that the gas on which the stream of particulate fuel is carried should also be enriched with oxygen, for the same reasons.

However, as the carrier gas and, to some extent, the secondary gas, are enriched with oxygen, the risk of flashback, namely ignition of the fuel before it enters the combustion chamber, increases.

This risk is particularly high where the carrier gas for the particulate fuel is enriched in oxygen, which in turn is required when other gases entering the combustion chamber are enriched in oxygen.

Difficulties can arise in other cases where the carrier gas for the particulate fuel is desirably oxygen enriched.

According to a first aspect of the invention we provide a process for making a mineral melt comprising
providing a circulating combustion chamber,
transporting solid particulate fuel along a fuel conduit and injecting the solid particulate fuel into the combustion chamber through a fuel inlet,
injecting particulate mineral material into the combustion chamber through a mineral material inlet,
injecting combustion gas into the combustion chamber through a first gas inlet,
mixing the fuel with the combustion gas and combusting the fuel to form a flame,
thereby melting the mineral material to form a mineral melt and hot exhaust gases,
separating the hot exhaust gases from the melt and collecting the melt,
and wherein the solid particulate fuel is not entrained in gas as it is injected through the fuel inlet and wherein the fuel and combustion gas are mixed by the provision of a stream of secondary gas through a second gas inlet which is adjacent the fuel inlet, wherein the secondary gas comprises at least 25% oxygen 02 and not more than 75% nitrogen N2,
and wherein the process includes substantially preventing gas entering the fuel conduit.

The method is particularly valuable in cases where the combustion gas is oxygen enriched, and contains at least 25% oxygen 02 and not more than 75% nitrogen N2. Percentages of oxygen and nitrogen are by volume.

We find that by introducing the solid particulate fuel in a form which is not entrained in gas and using a stream of secondary gas to mix the fuel with the combustion gas and preventing gas entering the fuel conduits from the circulating combustion chamber allows good mixing of the fuel with the combustion gas and a good combustion process but minimizes the risks of flashback. This method also allows the use of combustion gas (and secondary gas) which is highly enriched in oxygen and often substantially pure oxygen, which lead to the benefits already discussed above.

Thus in the method preferably the combustion gas comprises at least 25% oxygen 02, more preferably at least 40%, more preferably at least 50%, and is particularly valuable when the level is at least 80% and at least 90%, often at least 95% and in some cases substantially 100%.

Conversely, the invention is valuable when the combustion gas comprises reduced levels of nitrogen N2, and thus leads to the advantage that the levels of NOx generated are low. Thus preferably the combustion gas comprises not more than 75% nitrogen N2, more preferably not more than 60%, in particular not more than 50% and often not more than 20% or 10%, desirably not more than 5% and is some cases substantially zero.

In the invention the secondary gas is enriched in oxygen and reduced in nitrogen relative to air and the secondary gas preferably has the elevated levels of oxygen discussed above for the combustion gas and also preferably has the reduced levels of nitrogen discussed above for the combustion gas.

In the invention it is essential to provide means for substantially preventing gas entering the fuel conduit from the combustion chamber. This is achievable in the system of the invention, which does not supply the fuel to the combustion chamber entrained in air. This can be done by various means.

For instance, a mechanical closure which is substantially air tight between the end of the fuel conduit and the combustion chamber could be used. An example is a slide gate or a rotary lock. Rotary locks tend to have relatively low gas tightness and so are desirably made gas tight by pressure of a reducing gas such as carbon dioxide within the fuel conduit on the side of the rotary lock away from the combustion chamber.

The inclusion of a mechanical closure is particularly valuable when the fuel conduit transports the solid particulate fuel to the entrance to the circulating combustion chamber in a downward or substantially horizontal direction. As discussed below, it is possible in the invention to prevent gas entering the fuel conduit from the circulating combustion chamber without the use of a mechanical closure means by transporting the solid particulate fuel in an upward direction. However, when the fuel is not being transported in an upward direction then it is necessary to provide means to prevent entry of gas into the fuel conduit, in particular during times when there is no active feeding of fuel into the combustion chamber.

In the invention it is preferred that the fuel conduit is inclined upwardly as it approaches its end and the fuel inlet into the combustion chamber so that the solid particulate fuel is transported upwardly. It has the effect that the fuel itself produces a means of preventing gas entering the fuel conduit, by means of an "air lock" effect.

Preferably the fuel conduit is a screw conveyer, whereby the screw windings transport the powdered coal to the fuel inlet. It is particularly desirable to use a screw conveyer when the fuel conduit is inclined upwardly towards the fuel inlet but it is also possible to use a screw conveyer when the fuel conduit is inclined substantially horizontally or downwardly towards the fuel inlet.

The inlet of the fuel into the combustion chamber is configured in any appropriate manner.

If there is a mechanical means for preventing entry of gas into the fuel conduit this is preferably positioned substantially at the fuel inlet and in general not more than 20 to 30 cm from the fuel inlet.

The angle at which the fuel conduit approaches the fuel inlet, if not horizontal, is usually at least 10° from horizontal, for instance at least 20 or 30° from horizontal. Normally it is not more than 50° from horizontal, preferably not more than 45° from horizontal.

The solid particulate fuel is normally kept in a storage container such as a hopper and transferred from there to the fuel conduit when required.

The secondary gas is supplied to the combustion chamber adjacent to the fuel inlet so as to separate and distribute the particles of fuel.

Preferably the secondary gas inlet is configured so that the secondary gas is supplied concentrically around the fuel inlet. Thus preferably the secondary gas is supplied through a conduit which is arranged concentrically around the end of the fuel conduit at the fuel inlet.

In a preferred embodiment, the secondary gas is injected into the chamber through a nozzle which is structured so that it acts to increase the speed of the gas at the point of injection. This means that a lower gas speed is needed in the remainder of the gas inlet. This causes less wear than if the same injection speed was achieved without the use of a nozzle. The nozzle also imparts a lateral component to the secondary gas which is directed into the fuel stream as it exits the fuel conduit and enters the combustion chamber. This increases the mixing effect.

The secondary gas is preferably pressurised, i.e., is at pressure greater than atmospheric pressure (1 bar), preferably a pressure of 2 to 4 bar. In this embodiment, the gas expands on entry to the chamber, which increases the turbulence and mixing of the fuel particles with the combustion gas and the circulating hot gases. Therefore, a preferred feature is for the secondary gas to be at a higher pressure than the pressure in the cyclone, which is usually ambient. In particular, advantageous mixing occurs when the pressure of the secondary gas is greater than or equal to twice the pressure of the gases in the cyclone.

The secondary gas is preferably injected, i.e., exits the secondary gas inlet, at a sonic speed. "Sonic" in this context means a speed that is at or above the speed of sound. Under ambient conditions of temperature and pressure in air, this is a speed of about 340 m/s or above but it will vary substantially depending on the conditions and type of gas. What is important is that the secondary gas is travelling at or faster than the speed of sound under the particular conditions present. Secondary gas injected at such speeds has been found to have a substantial beneficial effect on fuel efficiency.

Thus in the invention it is preferred that the secondary gas is supplied via a nozzle, preferably of the types discussed above, which is arranged concentrically around the fuel inlet at the end of the fuel conduit.

In the present invention, secondary gas is also injected into the combustion chamber with the purpose of dispersing the solid fuel particles in the chamber and thereby mixing them with the combustion gas and the circulating gases. The secondary gas is injected through a secondary gas inlet which is positioned to inject the secondary gas adjacent to the fuel particles at or near to the point at which they enter the chamber. This brings the secondary gas into contact with the fuel stream and allows for mixing.

The primary mechanism by which the secondary gas causes dispersal of the fuel particles and their mixing with the combustion gas and circulating gases is usually differential in injection speed. The secondary gas is preferably injected at a high speed relative to the fuel particles. This results in shear forces between the stream of secondary gas and the slower moving fuel thereby resulting in thorough mixing.

On injection, the major component of the secondary gas will continue in the direction in which it is injected, linearly straight from the secondary gas inlet into the chamber. Therefore, most of the directional speed, i.e., velocity, will be in the direction of injection. As the secondary gas is travelling quickly, its momentum (a product of speed and mass flow) is high even if it is used in relatively low quantities. This momentum helps to maintain the cyclone currents. The secondary gas preferably also has a minor component which is travelling laterally, into the stream of fuel particles which helps with rapid and extensive mixing.

The secondary gas inlet may be situated anywhere in the vicinity of the fuel conduit so as to inject the gas adjacent to the fuel inlet but, to optimise the mixing effect, the secondary gas inlet preferably concentrically surrounds the fuel inlet. The combustion gas inlet may concentrically surround the secondary gas inlet or be elswehere. The secondary gas and combustion gas inlets are preferably cylindrical.

To optimise the mixing effect, in the most preferred embodiment, the injection speed of the secondary gas is sonic, i.e., at or above the speed of sound.

It is also preferred that the gas is pressurised, preferably to a pressure of at least twice the pressure in the chamber and is preferably between 2 and 4 bar. I this case, the gas expands on entering the chamber which increases the mixing effect further.

To achieve the high injection speed, it is preferred to inject the secondary gas through a converging nozzle as this increases the gas speed, meaning that lower gas speeds are needed in the remainder of the gas inlet, thereby minimising wear of the gas inlet and ensuring maximum longevity of the apparatus.

Any nozzle can be used, for example conventional nozzles such as "Laval nozzles" which increased the secondary gas to a supersonic speed.

The preferred nozzle is shaped to increase the speed of the gas to sonic speeds and is also shaped to direct a component of the gas stream laterally into the fuel stream. The interior surface of the nozzle preferably converges at an angle of between 20 to 40°, preferably of 25 to 35° wherein this is the angle at which the converging nozzle deviates from the previous part of the inlet. In contrast with a Laval nozzle, the opening of the nozzle is preferably the narrowest point, which increases the lateral directional component of the injected gas.

The secondary gas may be preheated but in the interests of energy efficiency and ease of compression is preferably not preheated.

In the process of the invention, only a relatively small amount of secondary gas is needed to give optimal mixing and, indeed, as the secondary gas is generally not preheated, the amount should be kept to a low level so that the high temperature in the chamber needed for melting is maintained. In this invention, the secondary gas preferably makes up less than 40% by weight of the total injected gas and more preferably makes up between 10 and 30%, most preferably between 15 and 20% of the total injected gas. The "total injected gas" includes the secondary gas plus the combustion gas as well as any other gas that is injected into the chamber.

The particulate mineral material, which is melted in the chamber to produce the mineral melt, is introduced into the chamber so that it becomes suspended in the gases therein. The particulate mineral material can be mixed with the fuel and injected through the fuel inlet. It is, however, preferable to add the particulate mineral material into the burning fuel. This can be achieved by adding the particulate mineral material into the chamber through an inlet in a conventional way, for example at the top of the chamber.

It is preferred in the invention that the particulate mineral material is preheated before it is injected into the combustion chamber.

This has the advantage of providing greater control to the temperature in the combustion chamber. It also has the advantage of avoiding temperatures in the combustion chamber which generate NOx (when nitrogen is present in the combustion chamber). Thus this contributes to reduction of generation of NOx.

Preferably preheating of the raw materials is carried out using the hot exhaust gases, which has the advantage of recycling the energy from the exhaust gases.

Preferably the raw materials are heated to a temperature of at least 700°C, more preferably at least 800°C, and generally not more than 1050°C. These temperatures have the advantage of contributing to NOx reduction when a NOx reducing compound is included in the preheating apparatus, as discussed further below.

Preferably the raw materials are preheated in a cyclone preheater. This is discussed further below and preferably the preheating is carried out under NOx reducing conditions, as also discussed further below. This has the effect of reducing NOx in the exhaust gases.

The circulating combustion chamber in the present invention is of the type which is frequently referred to as a cyclone furnace. Preferably it is water cooled. The construction of suitable cyclone furnaces is described in various patents including US 3,855,951, 4,135,904, 4,553,997, 4,544,394, 4,957,527, 5,114,122 and 5,494,863.

The solid particulate fuel that is used in the present invention is generally a carbonaceous material and can be any solid particulate carbonaceous material that has a suitable calorific value. This value can be relatively low, for instance as low as 10000kJ/kg or even as low as 5000kJ/kg. Thus it may be, for instance, dried sewage sludge or paper waste. Preferably it has higher calorific value and may be spent pot liner from the aluminium industry, coal containing waste such as coal tailings, or powdered coal.

In a preferred embodiment, the fuel is powdered coal and may be coal fines but preferably some, and usually at least 50% and preferably at least 80% and usually all of the coal is made by milling lump coal, for instance using a ball mill. The coal, whether it is supplied initially as fines or lump, may be good quality coal or may be waste coal containing a high inorganic content, for instance 5 to 50% inorganic with the balance being carbon. Preferably the coal is mainly or wholly good quality coal for instance bituminous or sub-bituminous coal (ASTM D388 1984) and contains volatiles which promote ignition.

The fuel particles preferably have a particle size in the range from 50 to 1000µm, preferably about 50 to 200, generally about 70µm average size, with the range being 90% below 100µm. This contributes to an excellent air lock effect in the embodiment where there is no mechanical closure means to prevent gas entering the fuel conduit from the combustion chamber.

Combustion gas is introduced into the chamber and can be at ambient temperature but is preferably preheated. The maximum desirable temperature that the combustion gas is preheated to is around 600°C, and the preferred preheating is to between 300 and 600°C, most preferably to around 500 to 550°C.

Where pure oxygen is used it is preferably at ambient temperature, rather than being preheated.

Within the circulating combustion chamber, combustion of the particulate coal takes place and the particulate mineral material is converted to melt while suspended in gas. Melt and particulate material may be thrown onto the walls of the chamber and will flow down the chamber, predominantly as melt. The circulating chamber can be a horizontal or inclined cyclone but often is vertical. It may lead downwardly into a tank for collecting melt. The chamber may open directly into the tank without going through a conical or other restricted exit duct of the type which is conventional in many systems, since providing a conical duct as the exit has no advantage and impedes flow from the base of the chamber. Preferably the circulating chamber leads downwards into a collecting zone where the melt is then transported for use in a fiberisation process. For example, the melt may be collected and then travel via a gutter to discharge positions from where the melt is discharged into fiberising spinners.

The tank can be in the base of the chamber (for instance as described in US 4,553,997) or it can be a settling tank of considerably enhanced volume. The settling tank should have sufficient gas volume to allow for precipitation of the melt droplets from the exhaust gas and sufficient melt volume to ensure dissolution of particles, which may only be partly melted, and for homogenisation of the melt. There may be a gas burner or other means for applying extra energy to the settling tank if necessary, for instance to raise the temperature of the exhaust gases, especially during start up.

The melt is collected, for example by being run off from the tank, when appropriate, through a gutter as a stream and may then be subjected to fiberisation in conventional manner, for instance using a cascade spinner or a spinning cup or any other conventional centrifugal fiberising process.

The hot exhaust gases rise up and are collected at the top of the circulating combustion chamber. In order to ensure that the level of environmentally harmful NOx in the separated exhaust gases is minimised, the exhaust gas is preferably treated. In a preferred embodiment, it is treated by contacting it with the particulate material under NOx reducing conditions in a cyclone preheater. This has the advantage of both reducing NOx in the exhaust gas and preheating the particulate material so that it melts more easily in the furnace.

The NOx reducing conditions are preferably generated by including in the cyclone preheater nitrogenous material which will reduce NOx under the conditions prevailing in the preheater. The nitrogenous material may be included in the hot exhaust gas which is fed to the preheater or may be added direct to the preheater.

The nitrogenous material which is included in the preheater cyclone is preferably ammonia or ammonium compound, an amine or urea, wherein the urea may be free or, more preferably, is a resinous product such as a urea formaldehyde or phenol urea formaldehyde resin. It is particularly preferred that the NOx reducing conditions are generated by including in the particulate material waste bonded mineral wool which is fed to the preheater cyclone, wherein the waste bonded mineral wool contains a urea resin (usually phenol urea resin) and/or ammonia or an ammonium compound (for instance as a buffering agent for resin in the waste wool). Thus, by the invention, it is possible simultaneously to utilise waste material and to react it under appropriate conditions so as to reduce a significant amount of the NOx in the exhaust gases to nitrogen.

The amount of ammonia or ammonia derivative or other NOx-reducing compound is preferably 1 to 4 (preferably 1 to 2 or, especially, 1 to 1.7) moles per mole NOx and the reaction is preferably conducted at a temperature of 800°C to 1050°C. The reaction residence time is preferably at least 0.3 seconds and most preferably at least 1 second. Typically this can be the residence time of the particulate mineral material in the cyclone preheater, and/or the ducting, until the exhaust gas is cooled below reaction temperature, e.g., below 800°C. Under these conditions, preferably with a temperature in the range 800 to 1050°C, substantially all the NOx is reduced to nitrogen, even though the atmosphere in the preheater is preferably oxidising.

Thus, according to another preferred feature of the invention the gaseous atmosphere in the cyclone preheater contains excess oxygen, preferably in an amount of at least 1% or 2% and most preferably at least 4%, for instance up to 8% by volume by weight of the gaseous atmosphere. Despite the oxidising nature of the atmosphere, NOx is reduced by the added ammonia or other nitrogenous compound under the conditions defined for the preheater.

The preheater can thus simultaneously operate as a NOx reducer and an oxidising after-burner to burn pollutants such as hydrogen sulphide and carbon monoxide from the circulating combustion chamber.

Preferably the exhaust gases which are separated from the melt and which are then fed to the cyclone preheater contain less oxygen than the amount which is present in the cyclone preheater and so preferably air or other source of oxygen is added to the exhaust gases either in the preheater or between the melt and the preheater.

Preferably the combustion in the circulating combustion chamber is near stoichiometric or even sub-stoichiometric. As a result of this, the amount of NOx generated during the combustion is minimised. The ratio of oxygen to combustible material is generally from 0.8 to 1, most preferably 0.85 to 0.99, often around 0.92 to 0.97.

Thus, in preferred process according to the invention the combustion of the carbonaceous particulate material and the melting of the particulate mineral material is conducted under slightly sub-stoichiometric conditions and the exhaust gas from this is then adjusted to be slightly oxidising and the exhaust gases are then, in a single operation, both subject to oxidising after burning and to NOx reduction, in a cyclone preheater.

The temperature of the exhaust gases when they are separated from the melt is preferably 1400 to 1700°C, often 1500 to 1600°C. The temperature of the gases entering the cyclone preheater is generally in the range 1000 to 1500°C. When, as is normal, this temperature is less than the temperature of the gas when it leaves the melt, the reduction in temperature can be achieved by dilution with air and/or liquid ammonia. The proportions of the inflowing exhaust gas and the particulate mineral material should be such that the mineral material is preheated to the desired temperature, typically 700° or 800 to 1050°C, in the cyclone preheater.

The exhaust gases from the preheater cyclone are used for preheating the air for the combustion of the carbonaceous material and generally the gases have a temperature in the range 800 to 900°C when they emerge from the preheater cyclone. They are preferably used for heat exchange with the incoming combustion air so as to preheat that air to a temperature of at least 500°C and preferably 600 to 900, most preferably around 700 to 800°C.

The invention is particularly valuable when the mineral melt is subsequently used for production of mineral wool. Thus in the invention the process preferably comprises the additional step of flowing a stream of the collected melt to a centrifugal fiberising apparatus and forming mineral fibres by centrifugally fiberising the stream of melt.

The invention also provides a novel apparatus suitable for operating the process of the invention. Thus in a second aspect the invention provides apparatus comprising
a circulating combustion chamber relaying a fuel conduit which terminates in a fuel inlet which opens into the combustion chamber,
a secondary gas inlet which concentrically surrounds the fuel inlet and has a converging nozzle at its opening,
means for injecting combustion gas into the chamber,
means for injecting particulate mineral material into the chamber,
means for separating hot exhaust gases from molten mineral material, and
means for collecting the melt,
wherein the fuel conduit is a screw conveyor and the screw conveyor windings do not extend completely to the fuel conduit,
and wherein the screw conveyor is upwardly inclined towards the fuel inlet.

This apparatus can be used to operate processes of the first aspect of the invention as discussed above and preferred features of that process are applicable to the apparatus of the invention.

The apparatus may also preferably comprise means for fiberising the collected melt.

### Description of the Figures

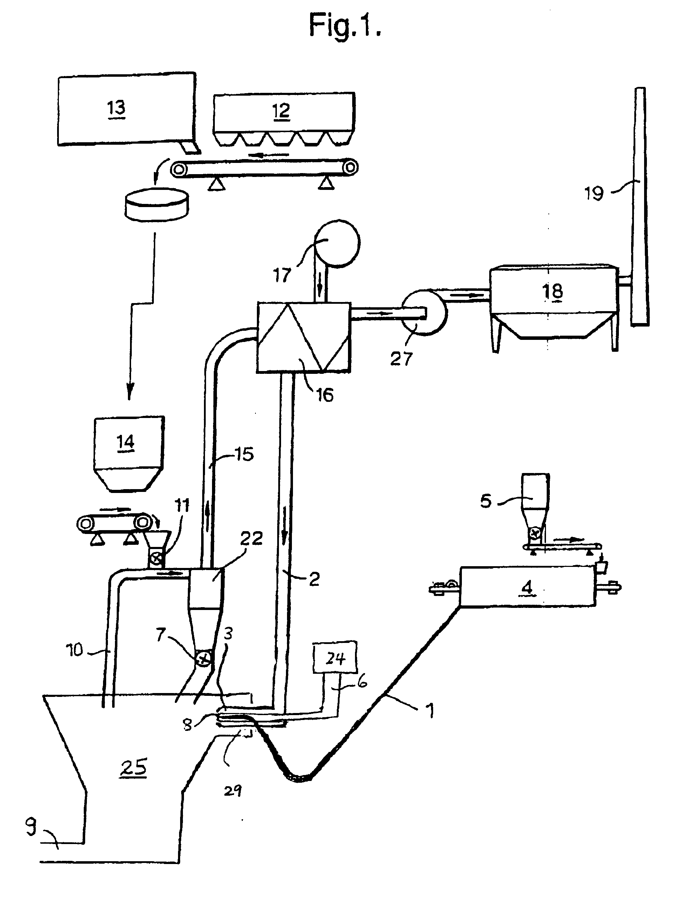

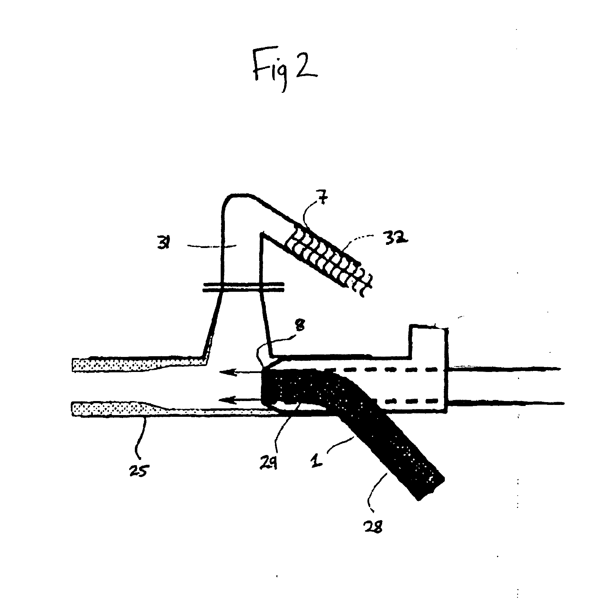

A preferred embodiment of the invention will now be described by reference to the accompanying drawings, Figures 1 and 2.

Lump coal is supplied from a silo and milled using a ball mill (not shown). It is then conveyed via screw feeding through fuel conduit 1 before being injected at the end of the fuel conduit 1 into the circulating combustion chamber.

As the fuel conduit approaches the fuel inlet 29 it is upwardly inclined at an angle greater than 20°, preferably around 30°. The configuration of the fuel inlet is shown in more detail in Figure 2, discussed further below.

Particulate material is supplied from hoppers 12 and 13, wherein hopper 13 is particularly important because it contains waste particulate material which contains a source of nitrogen, such as bonded mineral wool wherein the bonding agent is a urea resin. The various materials from hoppers 12 and 13, with additional pulverization in a ball mill or other mill if necessary, are then blended and fed into a silo 14 and from this they are continuously discharged into the feed 11. From here they pass through the cyclone preheater 22 into the circulating combustion chamber 25 through feed 7. In Figure 1, the mineral material feed 7 includes a rotary lock. An alternative configuration is shown in Figure 2 where the mineral material feed 7 includes an inclined screw conveyer. Any kind of lock (such as the rotary lock in figure 1 or the inclined screw conveyer in figure 2) can be included in the raw material inlet.

The combustion gas, in this case substantially pure oxygen, is supplied from ventilator 17, through heat exchanger 16 and via duct 2 into combustion gas inlet 3 from where it is injected into the circulating combustion chamber 25. The combustion gas inlet preferably concentrically surrounds the fuel inlet 1 and secondary gas inlet 6 and 8.

Secondary gas, in this case substantially pure oxygen, is provided from source 24 via duct 6 to nozzle 8 from where it is injected into the circulating combustion chamber 25 at sonic speeds.

Within the circulating combustion chamber 25, the secondary air causes rapid mixing of the coal with the combustion air and the hot gases which are circulating within the chamber. The secondary air also supports the cyclone effect within the chamber due to its high velocity into the chamber.

Following the rapid mixing, the fuel combusts and the particulate mineral material is converted to melt while suspended in air. The melt and particulate material may be thrown on to the walls of the chamber and will flow down the chamber, predominantly as melt.

The melt is run off from the chamber (optionally via a settling tank, not shown), through gutter 9 as a stream. It may then be subjected to fiberisation in conventional manner or may be run off to some other manufacturing process.

Exhaust gases free of melt are taken from the circulating combustion chamber 25 through duct 10. Most or all of the particulate material which is to be melted is preheated by the exhaust gases, by being fed into the flowing stream of exhaust gas in duct 10 by the feed 11,and the resultant suspension in gas is then passed into the preheater cyclone 22.

The exhaust gases in duct 10 approaching feed 11 will usually have been cooled down by dilution with air and/or water (not shown) to a temperature of 1200°C to 1400°C suitable for preheating the particulate material in the cyclone 22 to a temperature in the range 700 to 1000°C, generally around 800°C.

These exhaust gases in duct 10 approaching feed 11 will usually have been cooled down by dilution with air and/or water (not shown) to a temperature of 1200°C to 1400°C suitable for preheating the particulate material in the cyclone 22 to a temperature in the range 700 to 1000°C, generally around 800°C.

These exhaust gases usually leave the cyclone 22 at a temperature in the range 800 to 1000°C, preferably around 900°C. At these temperatures, there will be selective on-catalytic reduction of NOx predominantly to nitrogen, with the result that the exhaust gases from the cyclone 22, which leave through duct 15, will have a satisfactorily low NOx content and will preferably be substantially free of NOx.

The exhaust gases then pass through a heat exchanger 16 by which there is indirect heat exchange with combustion air from ventilator 17, thus generating the desired stream of preheated combustion air through duct 2. The waste gas is vented through ventilator 27, and filter 18 to stack 19.

Figure 2 shows the screw windings 28 within the fuel conduit 1 as it approaches the fuel inlet 29. It will be seen that the screw windings 28 terminate a short distance before the fuel inlet 29 so that the powdered coal forms a plug which is essentially gas tight and prevents ingress of gas from the combustion chamber 25 into the fuel conduit 1.

The secondary gas inlet 8 concentrically surrounds the fuel inlet 29.

The raw material feed 7 also comprises screw feeder 30 within the particulate material conduit 7 which is also upwardly inclined to the particulate material inlet 31. The particulate material enters the combustion chamber 25 just after the powdered coal is mixed with the secondary gas and forms a flame.

## Claims

1. A process for making a mineral melt comprising
providing a circulating combustion chamber
transporting solid particulate fuel along a fuel conduit and injecting the solid particulate fuel into the combustion chamber through a fuel inlet,
injecting particulate mineral material into the combustion chamber through a mineral material inlet,
injecting combustion gas into the combustion chamber through a first gas inlet,
mixing the fuel with the combustion gas and combusting the fuel to form a flame,
thereby melting the mineral material to form a mineral melt and hot exhaust gases,
separating the hot exhaust gases from the melt and collecting the melt,
and wherein the solid particulate fuel is not entrained in gas as it is injected through the fuel inlet and wherein the fuel and combustion gas are mixed by the provision of a stream of secondary gas through a second gas inlet which is adjacent the fuel inlet, wherein the secondary gas comprises at least 25% oxygen O₂ and not more than 75% nitrogen N₂,
and wherein the process includes substantially preventing gas entering the fuel conduit.

2. A process according to claim 1 in which the combustion gas comprises at least 25% oxygen and not more than 75% nitrogen N₂.

3. A process according to claim 2 in which the combustion air comprises at least 80% oxygen O₂.

4. A process according to claim 3 in which the combustion air comprises at least 90% oxygen O₂

5. A process according to any preceding claim in which the secondary gas comprises at least 80% oxygen O₂.

6. A process according to claim 5 in which the secondary gas comprises at least 90% oxygen O₂.

7. A process according to any preceding claim in which the combustion gas comprises not more than 10% nitrogen N₂.

8. A process according to any preceding claim in which the secondary gas comprises not more than 10% nitrogen N₂.

9. A process according to any preceding claim in which the fuel conduit is inclined upwardly toward the fuel inlet at an angle of from 10 to 45° with the horizontal and propels the fuel along the fuel conduit by means of a screw conveyor, wherein the screw does not extend fully to the fuel conduit.

10. A process according to any preceding claim in which the secondary gas is supplied to the combustion chamber through a secondary gas inlet which is configured so that the secondary gas is supplied concentrically around the fuel inlet.

11. A process according to any preceding claim in which the secondary gas is injected into the combustion chamber at a sonic speed

12. A process according to any preceding claim in which the combustion gas is supplied to the combustion chamber through a first gas inlet which is configured so that the combustion gas is supplied concentrically around the fuel inlet.

13. A process according to any preceding claim in which the particulate mineral material is preheated before it is injected into the combustion chamber.

14. A process according to any preceding claim in which the particulate mineral material is supplied to the mineral material inlet along a mineral material conduit and the mineral material conduit is upwardly inclined at an angle of from 10 to 45° with the horizontal towards the mineral material inlet and the mineral material is propelled along the inlet by means of a screw conveyor which does not extend fully to the mineral material inlet.

15. A process according to any preceding claim in which the mineral material is injected into the combustion chamber at a point adjacent to the inlet of fuel and secondary gas.

16. A process according to any preceding claim in which the solid particulate fuel comprises coal powder.

17. A process according to any preceding claim comprising the additional step of flowing a stream of the collected melt to a centrifugal fiberising apparatus and forming mineral fibres by centrifugally fiberising the stream of melt.

18. An apparatus suitable for making a mineral melt comprising
a circulating combustion chamber,
a fuel conduit which terminates in a fuel inlet which opens into the combustion chamber,
a secondary gas inlet which concentrically surrounds the fuel inlet and has a converging nozzle at its opening,
means for injecting combustion gas into the chamber,
means for injecting particulate mineral material into the chamber,
means for separating hot exhaust gases from molten mineral material, and
means for collecting the melt,
wherein the fuel conduit is a screw conveyor and the screw conveyor windings do not extend completely to the fuel conduit,
and wherein the screw conveyor is upwardly inclined towards the fuel inlet.

19. Apparatus according to claim 18 additionally comprising means for fiberising the collected melt.

20. Apparatus according to claim 18 or 19 in which the secondary gas is supplied to the combustion chamber through a secondary gas inlet which is configured so that the secondary gas is supplied concentrically around the fuel inlet and the combustion gas is supplied to the combustion chamber through a first gas inlet which is configured so that the combustion gas is supplied concentrically around the fuel inlet and the secondary gas inlet.
